# EUROPEAN PATENT APPLICATION

(11) **EP 1 145 744 A2**
(43) Date of publication of application: **17.10.2001**
(21) Application number: 01300005.4
(22) Date of filing: 02.01.2001
(51) Int. Cl.: A63F 9/00, A63F 13/00

(54) **Game system and computer readable storage medium therefor**

(30) Priority: 06.01.2000 JP 2000005761
(71) Applicant: Konami Corporation, Minato-ku, Tokyo (JP)
(72) Inventor: Fukuda, Rie, Konami Computer E. Nagoya Co., Ltd., Nagoya-shi, Aichi (JP)
(74) Representative: Haley, Stephen

(57) **Abstract**

A game system (1) includes: a game music storage device (3) for storing music data corresponding to music to be reproduced in a predetermined scene during a game; a game control device (2) for executing a game based on a predetermined game program and for reading out the music data of the game from the game music storage device (3) and outputting the read-out music data; and a music reproducing device for reproducing the music data of the game outputted by the game control device (2), wherein the game control device (2) comprises a music data producing means for producing a new music data different in arrangement, based on the music data, and outputting the produced music data to the music reproducing device.

## Description

The present invention relates to a game system capable of arranging music data corresponding to music to be reproduced in a scene of a game.

Game music (BGM) to be reproduced during a game is requisite for various types of games such as a roll playing game, simulation game, action game, and so on, which music urges a player into a game.

In order not to make a game itself monotonous, the same music is not used during the whole game, but the game music (BGM) to be reproduced is various in every stage or every scene of the game. Especially, in the recent game, the content of the game itself is more varied and more complicated, and according to this, the data amount of the game music becomes more and more increased.

Separate data is prepared for every game music and the data corresponding to each scene is read out to be reproduced in the conventional art.

When the data amount of the game music to be reproduced during a game is increased, however, it becomes difficult for a game system of small capacity such as a portable game system to store all the data into a storage medium of the game system.

It is an object of the present invention to provide a game system capable of decreasing the data amount of the game music to be stored in a game system.

According to one aspect of the present invention, there is provided a game system including : a game music storage device for storing music data corresponding to music to be reproduced in a predetermined scene during a game; a game control device for executing a game based on a predetermined game program and for reading out the music data of the game from the game music storage device and outputting the read-out music data; and a music reproducing device for reproducing the music data of the game outputted by the game control device, wherein the game control device comprises a music data producing means for producing a new music data different in arrangement, based on the music data, and outputting the produced music data to the music reproducing device.

By the game system thus configured, a new music data different in arrangement is generated based on a music data. And the new music data is reproduced as a game music.

Therefore, it is not necessary to previously store the data of the new game music into the game system, thereby the data amount of the game music stored in the game system may be decreased.

The music data may include at least one kind of music part data and the more, and the game control device may add the data of another music part to the music data, and may generate a new music data different in arrangement.

Thus, it is not necessary to previously store the data of the new game music into the game system, thereby the data amount of the game music stored in the game system may be decreased. Further, it is possible to gradually increase the depth of the sound in a game music.

The music data may include several kinds of music part data, and the game control device may remove the data of a music part from the music data, and may generate a new music data different in arrangement.

Thus, it is not necessary to previously store the data of the new game music into the game system, thereby the data amount of the game music stored in the game system may be decreased.

The game control device may change the tempo of the sound of the music data, and may generate new music data different in arrangement.

Thus, it is not necessary to previously store the data of the new game music into the game system, thereby the data amount of the game music stored in the game system may be decreased.

The game control device may change the rhythm of sound of the music data, and may generate new music data different in arrangement.

Thus, it is not necessary to previously store the data of the new game music into the game system, thereby the data amount of the game music stored in the game system may be decreased.

The game control device may change keys of the sound of the music data, and may generate new music data different in arrangement.

Thus, it is not necessary to previously store the data of the new game music into the game system, thereby the data amount of the game music stored in the game system may be decreased.

The game control device may change the scale of the music data, and may generate new music data different in arrangement.

Thus, it is not necessary to previously store the data of the new game music into the game system, thereby the data amount of the game music stored in the game system may be decreased.

The game control device may shift up the music data by half scale, and may generate new music data different in arrangement. Thus, it is not necessary to previously store the data of the new game music into the game system, thereby the data amount of the game music stored in the game system may be decreased.

The game control device may shift up the music data by half scale in every predetermined section of the game, and may generate a new music data different in arrangement.

Thus, the vivid feeling of a game may be gradually enhanced, as the scale of a game music may be the gradual increased.

The game system may be a small-size portable game system.

Thus, the data amount of the game music stored in the game system may be decreased in the small-size portable game system (for example, a small game which can be put in a pocket of cloth and has small-storage capacity).

According to another aspect of the present invention, there is constituted a computer readable storage medium carrying a game program which executes a game and reads out and outputs the read-out music data. And the program controls the computer to function as a music data producing means for producing a new music data different in arrangement based on the music data and reproducing the generated music data.

Also by this medium, it is not necessary to previously store the data of the new game music into the storage medium, thereby the data amount of the game music stored in the storage medium may be decreased.

According to the third aspect of the present invention, there is provided a game system including : a game music storage device for storing music data corresponding to music to be reproduced in a predetermined scene during a game; a game control device for executing a game based on a predetermined game program and for reading out the music data of the game from the game music storage device and outputting the read-out music data; and a music reproducing device for reproducing the music data of the game outputted by the game control device, wherein the game control device comprises a music data producing means for producing a new music data, shifted up the music data by half scale and outputting the generated music data to the music reproducing device.

Therefore, it is not necessary to previously store the data of the new game music into the game system, thereby the data amount of the game music stored in the game system may be decreased.

The game control device may shift up the music data by half scale in every predetermined section, and may generate a new music data.

Thus, the vivid feeling of a game may be gradually enhanced, as the scale of a game music may be the gradual increased.

The game system may be a small-size portable game system.

Thus, the data amount of the game music stored in the game system may be decreased in the small-size portable game system (for example, a small game which can be put in a pocket of cloth and has small-storage capacity).

According to the fourth aspect of the present invention, there is constituted a computer readable storage medium carrying a game program which executes a game and reads out and outputs the read-out music data. And the program controls the computer to function as a music data producing means for producing a new music data shifted up the music data by half scale and reproducing the generated music data.

Also by this medium, it is not necessary to previously store the data of the new game music into the storage medium, thereby the data amount of the game music stored in the storage medium may be decreased.

The nature, utility, and further features of this invention will be more clearly apparent from the following detailed description with respect to preferred embodiment of the invention when read in conjunction with the accompanying drawings briefly described below.
FIG. 1 is a diagram showing a schematic configuration of a game system according to the present invention;
FIG. 2 is a diagram showing a memory map within a semiconductor memory of an external ROM cartridge;
FIG. 3 is a diagram showing an example of generating a new game music different in arrangement in every scene;
FIG. 4 is a view showing an example of adding data from B-part to D-part to data of A-part;
FIG. 5 is a flowchart showing the processing of the game music in the game system according to the present invention when holding a fishing contest;
FIG. 6 is a flowchart showing the processing of the game music in the game system according to the present invention when holding a fishing contest;
FIG. 7 is a view showing an example of one of the music part included in the data of the game music; and
FIG. 8 is a view showing an example of a BGM short in reach situation.

The preferred embodiment of the present invention will now be described below with reference to the attached drawings.

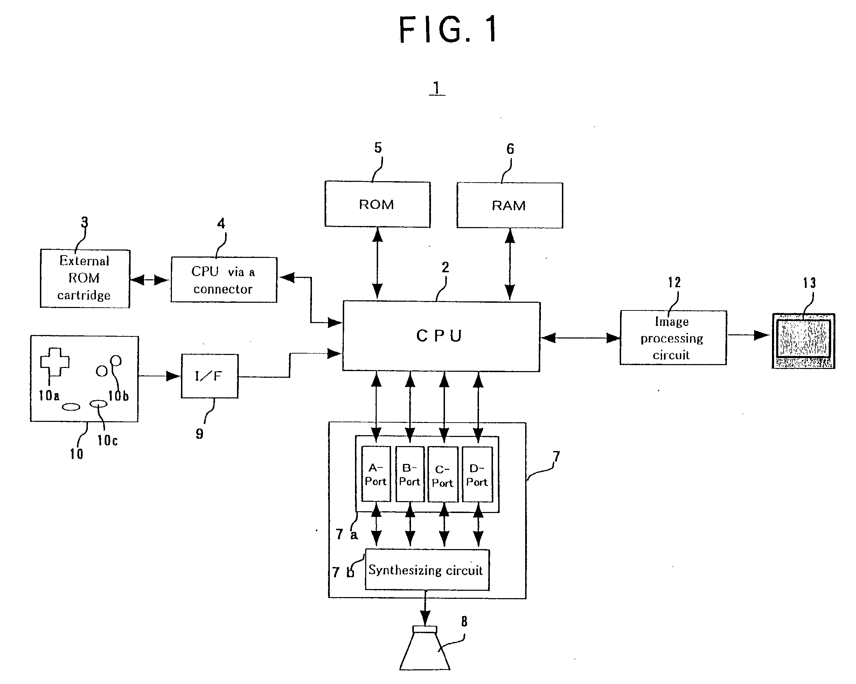

FIG. 1 shows a schematic diagram of a game system 1 according to the present invention. As shown in FIG. 1, the game system 1 includes a CPU 2 which is mainly configured by a microprocessor unit. The CPU 2 performs total control of the game system 1 according to the game program stored in an external ROM cartridge 3 while monitoring the signal supplied from a controller 10 via an interface 9. Here, it is assumed that the game system 1 is a portable small-size game system.

The external ROM cartridge 3 is detachably connected to the CPU 2 via a connector 4 for an external ROM. The external ROM cartridge 3 accommodates a semiconductor memory (such as ROM or EP-ROM) which stores game control program, sound driver and various data in its each memory areas.

A game in embodiment of the invention is such a game that a character to be operated by a player takes part in a plurality of fishing contests (stages), winning in these contests and achieving a final goal (i.e., to win a prize in a contest of the greatest authority). The CPU 2 executes this game.

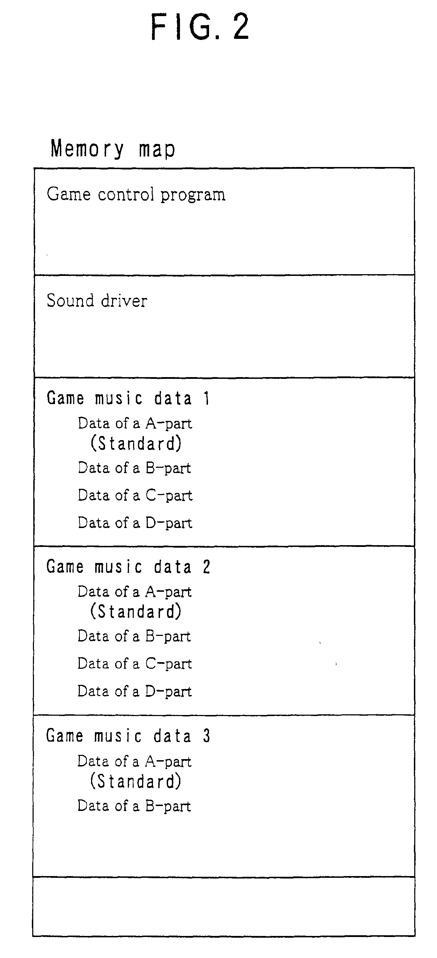

Various data stored in the external ROM cartridge 3 include game music to be reproduced by the speaker 8 during the game as well as image and character data to be shown on the image display device 13. The game music includes BGM (Background Music) to be reproduced by the speaker 8 during the above fishing contest. Data of a game music includes the data of music part of at least one type and the more. For example, the data of the game music 1 includes the data of a A-part, the data of a B-part, the data of a C-part, and the data of a D-part, as shown in FIG. 2. In addition, e.g., main melody is stored in the data of the A-part, sub-melody is stored in the data of the B-part, bass melody is stored in the data of the C-part, and melody of drum is stored in the data of the D-part. The content of the data stored in each part is different from each other.

In addition, a ROM 5 and a RAM 6 serving as main storage devices are connected to the CPU 2. The ROM 5 stores operating system serving as program necessary for the whole operation control of the game system 1 as well as data necessary for the execution of the operating system. The RAM 6 includes a plurality of storage areas for temporarily storing various data during the game processing, and stores the data of the game music, as shown in FIG. 2, to be reproduced from the speaker 8 during the game, for example. Further, the CPU 2 stores sound driver for outputting the data of the game music to a audio processing circuit 7 into a work area of the RAM 6.

The audio processing circuit 7 includes a port 7a and a synthesizing circuit 7b. The port 7a includes an A-port, a B-port, a C-port and a D-port. These ports convert the data of each part of the game music into sound source signals and output them. The A-port and the B-port are pulse sound generation sources (PSG). The C-port is a simplified waveform sound generation source, and the D-port is a noise sound generation source.

The CPU 2 reads out each part data of the game music data from the RAM 6 with referring to the sound driver stored in the RAM 6, and outputs them to the respective ports. For example, the data of the A-part is outputted to the A-port, the data of the B-part is outputted to the B-port, the data of the C-part is outputted to the C-port, and the data of the D-part is outputted to the D-port.

The synthesizing circuit 7b generates the game music by synthesized the sound source signal outputted by the port 7a, converts them into an analog sound signals, and outputs it to the speaker 8 at a predetermined timing.

In the present invention, a new music data different in arrangement is generated, depending on the scene of a game, based on one game music data, and reproduced.

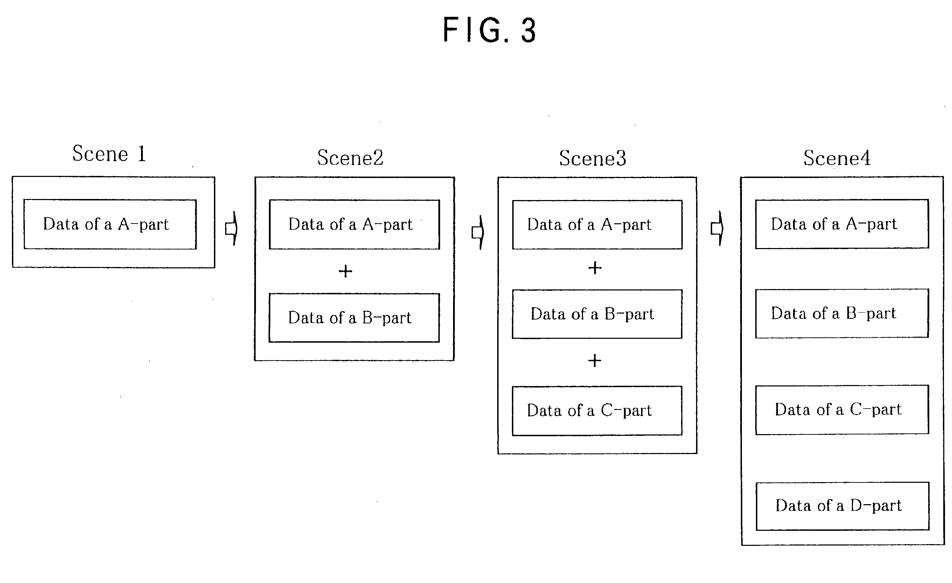

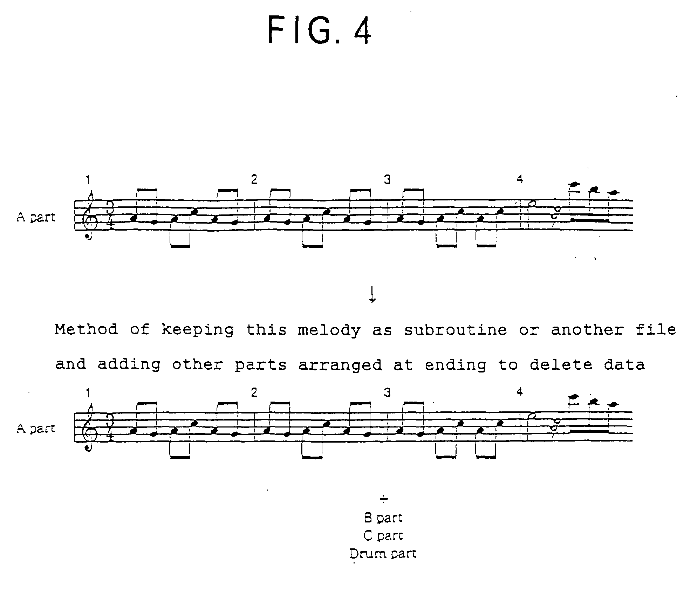

As shown in FIG. 3, for example, in the scene 1 of a game, only the data of the A-part is read out from the RAM 6, and outputted from the speaker 8 via the audio processing circuit 7 as the game music. Next, in the scene 2, the data of the A-part and the B-part is read out from the RAM 6, synthesized by the audio processing circuit 7, and outputted from the speaker 8 as the game music. Thus, the data of the B-part is added to the data of the game music reproduced in the scene 1, thereby to reproduce new game music data different in arrangement. In the scene 3, the data of the A-part, the B-part, and the C-part are read out from the RAM 6, synthesized by the audio processing circuit 7, and outputted from the speaker 8 as the game music. In the scene 4, the whole data of the A-part to the D-part are read out from the RAM 6, synthesized by the audio processing circuit 7, and outputted from the speaker 8 as the game music. In these ways, the data of the game music reproduced in the scene 1 is generated and reproduced as new music data different in arrangement, every time the scene varies. For example, the music of the B-part to the D-part are added to the music of the A-part as shown in FIG. 4, hence to be reproduced as new music. According to the progress of the game, the sound of the game music may be made deeper. If good performance of the game is accompanied with the gradually increasing depth of the game music sound, the vivid feeling in playing the game may be enhanced, and a player's mind is urged on the game.

As another method, for example, in the scene 1, the whole data of the A-part to the D-part are read out from the RAM 6, synthesized by the audio processing circuit 7, and outputted from the speaker 8 as the game music. Next, in the scene 2, the data of the A-part to the C-part are read out from the RAM 6, synthesized by the audio processing circuit 7, and outputted from the speaker 8 as the game music. Thus, consequently in the scene 2, one of the music parts of the game music reproduced in the scene 1 are removed, and it is reproduced as new game music different in arrangement.

Further, it is also possible to generate new game music by using the data of the music part of another game music data, instead of the data of the own music part of the same game music data. For example, it is possible to generate new game music by reading out the data of the A-part, the B-part, and the D-part of the game music data 1 as shown in FIG. 2, from the RAM 6 and the data of the C-part of the game music data 2, and by synthesizing them.

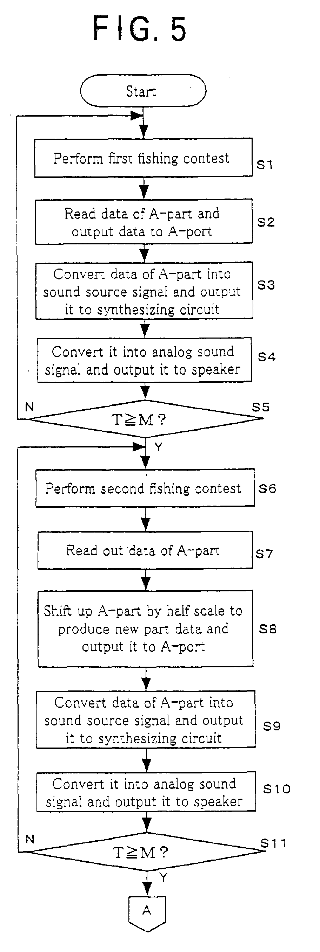

Further as another method, for example, it is possible to change the tempo or the rhythm of the sound of each part of the game music data (i.e., make the game music slow and fast), change the tone, change the scale of the sound, or change the key (i.e., shift) of the sound, in the step prior to the output to the audio processing circuit 7. In the method of changing the key of the sound, for example, it is possible to make the sound in a major key at bright ending, and make it in a minor key at dark ending. Thus, the music may be reproduced in accordance with a player's mind even in the same game music. In the method of changing the scale of the sound, it is possible to make flat the third sound from the starting of the sound. As described in the operation of this game system referring to FIG. 5, it is possible to shift up each part by half scale in every stage.

As mentioned above, in the present invention, new game music different in arrangement may be generated, depending on the scene of a game, based on one game music, without necessity of storing all the data of the game music reproduced during a game into the external ROM cartridge 3, thereby the volume of the game music data may be decreased.

To the CPU 2, the controller 10 is connected via the interface 9. The controller 10 is an input device for outputting a signal corresponding to the manipulation by a player. The controller 10 includes a ten-key 10a for selecting action of a character established to be operated by a player, which is displayed on the image display 13, a deciding key 10b for deciding the action of a character, and a start key 10c for instructing the start of the game. A player may be act just like a character established to be operated by the player, which is displayed on the image display 13, so as to move the character at his or her will.

To the CPU 2, the image display device 13 is connected via the image processing circuit 12. The image processing circuit 12 converts the image data into a video signal according to the instruction by the CPU 2, and outputs the video signal to the image display device 13 at the predetermined timings.

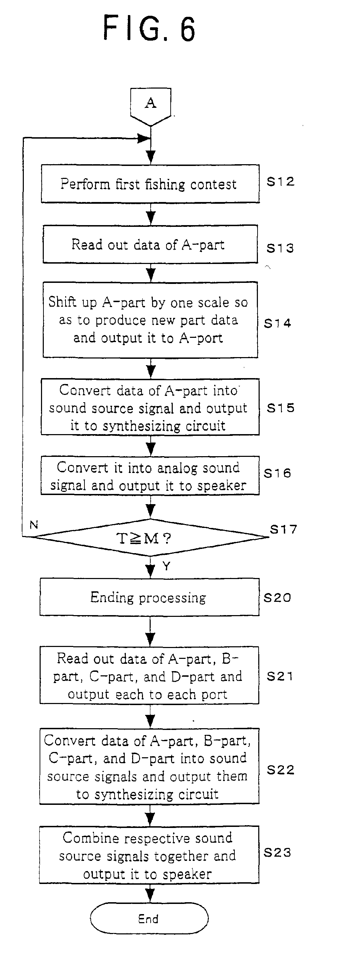

Next, by referring to FIG. 5 and 6, the description will be given of the game music processing in a game system according to the present.

When the game program is executed, the CPU 2 reads out desired game music data and image and character data from the external ROM cartridge 3, and stores them in the RAM 6. Then, the CPU 2 executes the fishing game program with referring to the instruction inputted by the user via the controller 10.

The fishing game consists of a plurality of fishing contests (i.e., stages). In these fishing contests, various winning conditions are respectively established; for example, such a condition that a person getting the greatest number of fishes within a predetermined hour wins a prize or that a person getting the largest fish wins a prize.

The CPU 2 executes a first fishing contest (S1) with referring to the instruction inputted by the player via the controller 10 and reads out the data of the A-part of the game music data 1 from the RAM 6. The CPU 2 outputs the data of the A-part to the A-port with referring to the sound driver stored in the RAM 6 (S2). Here, though it is assumed that the game music data read out from the RAM 6 is the game music data 1 as shown in FIG. 2, it may be the game music data 2 or the game music data 3. Not only the data of the A-part but also the data of the B-part to the D-part may be read out.

The data of the A-part outputted to the A-port is converted into a sound source signal and outputted to the synthesizing circuit 7b (S3). And the synthesizing circuit 7b converts the sound source signal into an analog sound signal and outputs it to the speaker 8 (S4).

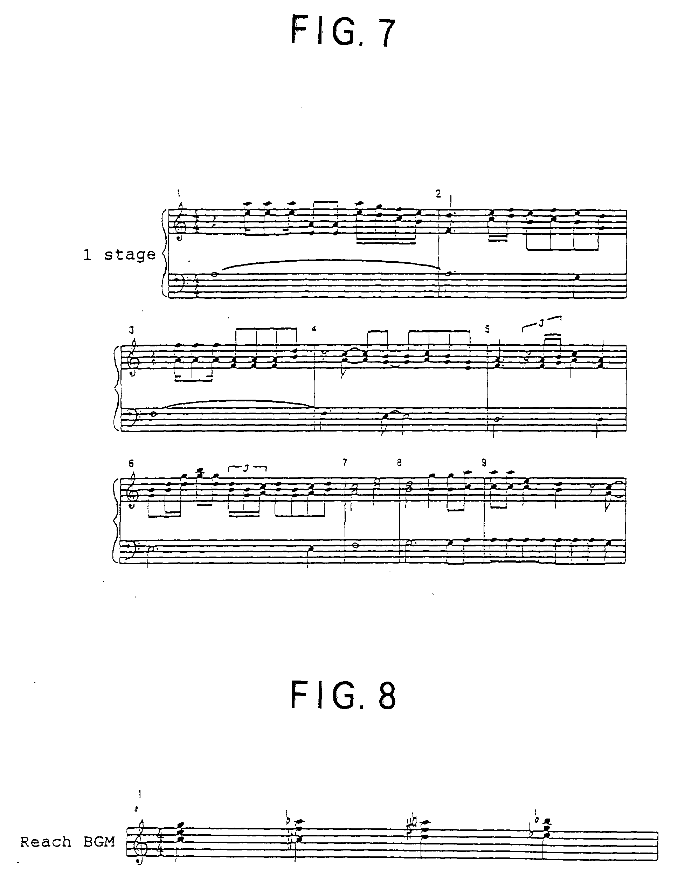

Thus, a player can hear the game music as shown in the music of FIG. 7 from the speaker 8.

The CPU 2 counts a time (T) in the process of executing the first fishing contest, and when the time (T) becomes a predetermined time (M) and the more (S5), the first fishing contest is finished. In the first fishing contest, the game music is reproduced and it is repeatedly reproduced until the first fishing contest is finished.

The CPU 2 stores the scene in which a character to be operated by a player is catching a fish, and the like, into the RAM 6, in order to output a flashback at the ending of the game. Such processing will be performed in the same way as in the second fishing contest and the later.

Next, the CPU 2 executes the second fishing contest (S6), with referring to the instruction inputted by the player via the controller 10, and reads out the data of the A-part of the game music data 1 (S7). The CPU 2 shifts up the scale of the data of the A-part by half scale, generates new data, and outputs the data to the A-port with referring to the sound driver stored in the RAM 6 (S8). This processing of shifting up the scale of the data of the A-part by half scale may be performed by a music data processing circuit for being separately provided, not by the CPU 2.

The data of the A-part outputted to the A-port is converted into a sound source signal and outputted to the synthesizing circuit 7b (S9). And the synthesizing circuit 7b converts the sound source signal into an analog sound signal and outputs it to the speaker 8 (S10). Thus, a player can hear the game music arranged by the processing of shifting up the game music reproduced in the first fishing contest by half scale. Similarly to the first fishing contest, when the predetermined time (M) has passed since the second fishing contest started (S11), the second fishing contest will be finished.

As shown in FIG. 6, the CPU 2 executes the third fishing contest (S12), with referring to the instruction inputted by the player via the controller 10, and reads out the data of the A-part of the game music data 1 (S13). The CPU 2 shifts up the scale of the data of the A-part by one scale, generates new data, and outputs the data to the A-port with referring to the sound driver stored in the RAM 6 (S14). Namely, the game music reproduced in the second fishing contest is to be shifted up by half scale. The processing from Step S15 to Step S17 will be performed in the same way as in Step S9 to Step S11, thereby the third fishing contest may be finished.

Although it is not shown, the fourth fishing contest will be executed in the same way as the above, and the game music is to be shifted up by every half scale every time fishing contest is held. Thus, the game music as shown in FIG. 7 can be shifted up by half scale in every fishing contest, thereby the player's concentration in more enthusiastic atmosphere may be enhanced. In a fishing contest, only when a player wins a prize, the game music to be reproduced in the next fishing contest can be arranged to be shifted up by half scale.

Besides, in one fishing contest, it is possible to shift up BGM reproduced short in reach, e.g., the BGM as shown in FIG. 8, by half scale, in a short time, thereby the strained feeling effectively by small data may be produced.

When these fishing contests are all finished, or a predetermined condition is satisfied, the CPU 2 executes the ending processing of the game as shown in FIG. 6 (S20), and reproduces flashback in the fishing contests where a character to be operated by a player has participated, on the image display 13.

During the reproduction of the flashback, the CPU 2 reads out the data of the B-part, the data of the C-part, and the data of the D-part, in addition to the data of the A-part of the game music data 1 used in the fishing contest where a character to be operated by a player has participated, from the RAM 6. The CPU 2 outputs the data of the A-part to the A-port, the data of the B-part to the B-port, the data of the C-part to the C-port, and the data of the D-part to the D-port respectively, with referring to the sound drive stored in the RAM 6 (S21). The data of each part outputted to each port is converted into a sound source signal and outputted to the synthesizing circuit 7b (S22). And the synthesizing circuit 7b generates these sound source signals, converts them into an analog sound signals and outputs it to the speaker 8 (S23).

As mentioned above, the B-part, the C-part and the D-part are added to the game music reproduced in the above fishing contest, new game music different in arrangement is produced and it will be reproduced at the ending of the game. Therefore, it is not necessary to store the data of the game music to be reproduced at the ending in advance, thereby the volume of storing data may be decreased.

The processing performed in Step S21 may be arranged to perform in Step S7. Further, it may be arranged that new game music can be properly produced and reproduced in one fishing contest.

Further, the present invention is applicable to the game of any genre, such as role-playing game, simulation game, action game and the like. Still further, the present invention may be implemented in a portable, but large-size home-use game system as well as the small-size portable game system. The present invention may also be implemented in a game system utilizing a network.

As described above, according to the present invention, it is not necessary to store all pieces of music to be reproduced during a game into a storage medium, but it is possible to produce and reproduce data of new game music different in arrangement based on the data of one game music, thereby to decrease the data amount of the game music. Data of one game music can produce and reproduce many pieces of game music each having different impression. Especially, even in a small-sized portable game system having small capacity, the kind of game music to be reproduced can be increased.

## Claims

1. A game system(1) comprising:
a game music storage device(3) for storing music data corresponding to music to be reproduced in a predetermined scene during a game; a game control device(2) for executing a game based on a predetermined game program and for reading out the music data of the game from the game music storage device(3) and outputting the read-out music data; and a music reproducing device for reproducing the music data of the game outputted by the game control device(2),
wherein the game control device(2) comprises a music data producing means for producing a new music data different in arrangement, based on the music data, and outputting the produced music data to the music reproducing device.

2. A game system(1) according to claim 1, wherein the music data includes at least one kind of music part data and the more, and
the game control device(2) adds the data of another music part to the music data, and generates a new music data different in arrangement.

3. A game system(1) according to claim 1, wherein the music data includes several kinds of music part data,
and the game control device (2) removes the data of a music part from the music data, and generates a new music data different in arrangement.

4. A game system(1) according to claim 1, wherein the game control device(2) changes the tempo of the sound of the music data, and generates new music data different in arrangement.

5. A game system(1) according to claim 1, wherein the game control device(2) changes the rhythm of sound of the music data, and generates new music data different in arrangement.

6. A game system(1) according to claim 1, wherein the game control device(2) changes keys of the sound of the music data, and generates new music data different in arrangement.

7. A game system(1) according to claim 1, wherein the game control device(2) changes the scale of the music data, and generates new music data different in arrangement.

8. A game system(1) according to claim 1, wherein the game control device(2) shifts up the music data by half scale, and generates new music data different in arrangement.

9. A game system(1) according to claim 1, wherein the game control device(2) shifts up the music data by half scale in every predetermined section of the game, and generates a new music data different in arrangement.

10. A game system(1) according to one of claims 1 to 9, wherein the game system includes a small-size portable game system.

11. A computer readable storage medium(3) carrying a game program which executes a game and reads out and outputs the read-out music data, and the program controls the computer to function as a music data producing means for producing a new music data different in arrangement based on the music data and reproducing the generated music data.

12. A game system(1) comprising:
a game music storage device(3) for storing music data corresponding to music to be reproduced in a predetermined scene during a game; a game control device(2) for executing a game based on a predetermined game program and for reading out the music data of the game from the game music storage device and outputting the read-out music data; and a music reproducing device for reproducing the music data of the game outputted by the game control device(2),
wherein the game control device(2) comprises a music data producing means for producing a new music data, shifted up the music data by half scale and outputting the generated music data to the music reproducing device.

13. A game system(1) according to claim 12, wherein the game control device(2) shifts up the music data by half scale in every predetermined section, and generates a new music data.

14. A game system(1) according to claim 12, or 13, wherein the game system( 1) includes be a small-size portable game system.

15. A computer readable storage medium(3) carrying a game program which executes a game and reads out and outputs the read-out music data, and the program controls the computer to function as a music data producing means for producing a new music data shifted up the music data by half scale and reproducing the generated music data.
